# FASCICULE DE BREVET EUROPEEN

(11) **EP 1 992 180 B1**
(45) Date de publication et mention de la délivrance du brevet: **30.09.2015**
(21) Numéro de dépôt: 07731565.3
(22) Date de dépôt: 01.02.2007
(51) Int. Cl.: H04L 12/58, H04L 12/14, H04M 15/00, H04M 15/08, H04W 4/14, H04W 4/24

(54) **PROCEDE DE DIFFUSION DE MESSAGE**
NACHRICHTENSENDEVERFAHREN
MESSAGE BROADCASTING METHOD

(30) Priorité: 06.02.2006 FR 0650414
(43) Date de publication de la demande: 19.11.2008
(73) Titulaire: Orange, 75015 Paris (FR)
(72) Inventeur: LEBOUC, Maryline, F-22300 Lannion (FR); BOUVIER, Hervé, F-13170 Les Pennes Mirabeau (FR); TINGAUD, Michel, F-22300 Lannion (FR)
(86) Numéro de dépôt international: PCT/FR2007/050738
(87) Numéro de publication internationale: WO 2007/093724

(56) Documents cités:
- EP-A- 1 458 200
- EP-A- 1 510 983
- WO-A-2005/062596
- US-A1- 2003 050 042

## Description

### Domaine de l'invention

La présente invention se rapporte au domaine des télécommunications et plus particulièrement aux systèmes de diffusion de messages tels que des messages courts du type SMS ("Short Message Service") envoyés depuis tous terminaux mobiles ou fixes.

### Art antérieur

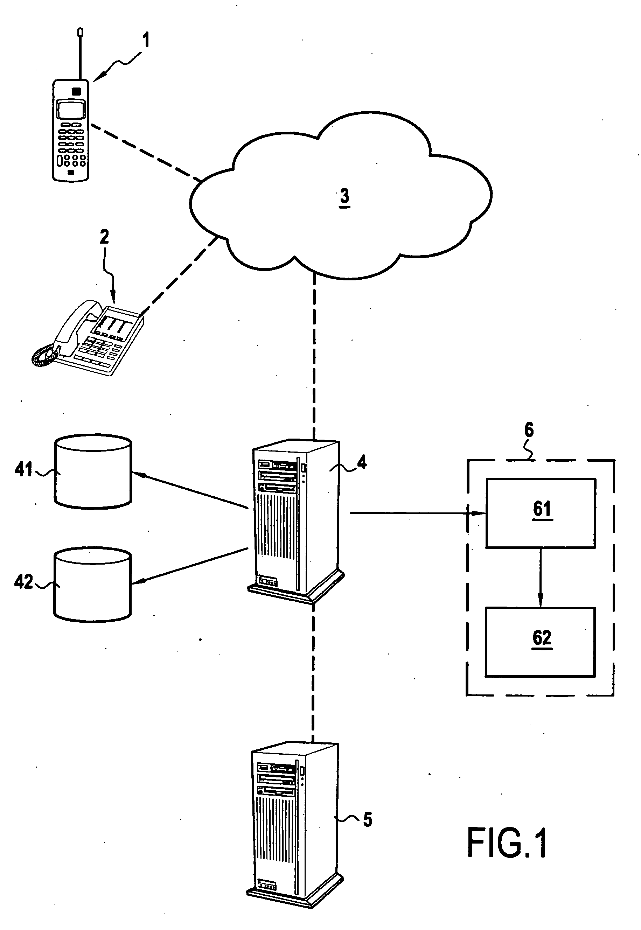

La figure 1 illustre une architecture d'un système actuel dans lequel sont réalisés les envois et la facturation des messages par exemple du type SMS ou "message SMS". Lorsqu'un utilisateur (ou "émetteur") souhaite envoyer un message SMS depuis un terminal mobile 1 ou un terminal fixe 2 à destination par exemple d'une plateforme de services 5, il compose et envoie celui-ci à une passerelle, qui dans le cas d'un message SMS sera une passerelle SMS 4 via un réseau de télécommunication 3. La passerelle SMS 4 établit, au moyen d'une base de données 41, la correspondance entre le numéro court indiqué dans le message SMS envoyé par l'utilisateur et le numéro réel du destinataire, ici la plateforme de services 5. La passerelle SMS transmet ensuite le message au destinataire et génère un ticket de taxation brut (encore appelé détail de communication DC), accompagné de données de valorisation issues d'une base de données 42, qu'elle transmet à un centre de facturation 6 comprenant un module de médiation 61 et un module de valorisation 62 permettant respectivement de compléter les données de gestion du ticket et d'associer un coût au ticket de taxation émis par la passerelle.

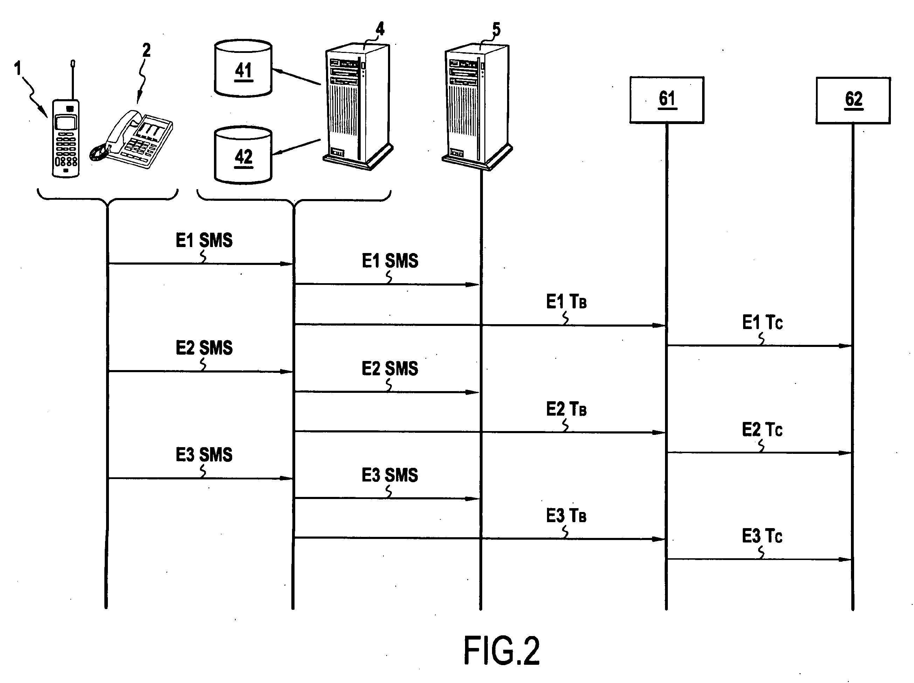

Lorsque l'utilisateur souhaite envoyer plusieurs fois le même message SMS à la plateforme de service, par exemple dans le cas où cette plateforme correspond à un système de comptabilisation de votes ou de dons, il n'a pas d'autre possibilité que de répéter les opérations nécessaires à la création et l'envoi d'un même message SMS pour chaque envoi. Plus précisément, la figure 2 illustre toutes les séquences mises en oeuvre lorsque l'utilisateur souhaite envoyer trois fois (ex. trois votes ou trois dons) le même message SMS à la plateforme de service 5. L'utilisateur compose et envoie une première fois un message SMS à la passerelle SMS 4 (E1 SMS). La passerelle traduit le numéro court et transmet le message SMS à la plateforme de service 5 (E1 SMS), puis génère un ticket de taxation brut T_{B} qu'elle envoie (E1 T_{B}) au module de médiation 61 du centre de facturation 6 qui l'enrichit et le transmet (E1 T_{C}) au module de valorisation 62. L'utilisateur souhaitant envoyer trois fois ce message à la plateforme 5, ces opérations doivent être renouvelées encore deux fois. L'utilisateur doit donc composer et envoyer à la passerelle le même message SMS deux fois encore (E2 SMS ; E3 SMS), la passerelle traduisant le numéro court et transmettant le message SMS à la plateforme de services 5 (E2 SMS, E3 SMS) après chaque envoi de l'utilisateur. Elle génère également à chaque fois un ticket de taxation brut T_{B} qu'elle envoie (E2 T_{B} ; E3 T_{B}) au module de médiation 61 qui l'enrichit et le transmet (E2 T_{C}; E3 T_{C}) au module de valorisation 62.

Par conséquent, dans les systèmes actuels de diffusion de messages SMS, il n'y a pas de possibilité d'automatiser l'envoi multiple d'un même message SMS à un même destinataire. Cela présente des inconvénients aussi bien au niveau de l'utilisateur que des ressources du réseau ou de la passerelle SMS. En effet, concernant l'utilisateur, plus le nombre d'envois qu'il souhaite effectuer augmente, plus la tâche devient pour lui fastidieuse. Au niveau du réseau de télécommunication entre le terminal de l'utilisateur et la passerelle SMS, le fait de devoir envoyer N fois le même message SMS contribue à occuper les ressources du réseau ainsi que celles de la passerelle SMS qui, comme expliquée précédemment, traite indépendamment chaque message SMS qu'elle reçoit notamment pour permettre la facturation de chaque envoi car elle n'est capable de générer qu'un seul ticket de taxation pour un dépôt de message SMS reçu d'un terminal.
EP 1 510 983 décrit un procédé pour virer de l'argent avec l'utilisation d'un téléphone. La personne B qui reçoit l'argent est identifiée par son numéro de téléphone dans un message SMS envoyé par une personne A qui lui souhaite envoyer de l'argent. La personne A doit envoyer le message SMS vers un numéro qui correspond à un montant spécifique, par exemple € 0,50. EP 1 510 983 décrit l'existence de plusieurs numéros, chaque numéro correspondant à un montant spécifique différent, voir figure 1. Pour virer € 0,40, l'utilisateur A doit envoyer séparément deux messages SMS au même numéro spécifique correspondant à € 0,20. Ce document d'antériorité décrit aussi la possibilité de virer deux fois le même montant en fonction de la durée de la connexion avec le numéro spécifique, voir par exemple paragraphe [0037]: "Zeitdauer einer Verbindung zu der jeweiligen Service-Rufnummer".
Cependant, EP1 510 983 ne décrit pas l'utilisation d'un nombre d'itérations (N) dans le message.

La présente invention a pour objet de pallier ces inconvénients en proposant une solution permettant à l'émetteur d'un message tel que par exemple un message SMS d'effectuer plusieurs actes (envois) avec ce message, et ce avec un dépôt unique du message depuis son terminal.

Ceci est atteint grâce à un procédé de diffusion de messages comprenant:
- une étape de composition d'un message à partir d'un terminal comportant au moins un numéro d'appel d'un destinataire dudit message,
- une étape d'envoi du message par le terminal à une passerelle,
- une étape de transmission du message par la passerelle vers le destinataire dudit message,
caractérisé en ce que, l'étape de composition comprend en outre une introduction d'un nombre d'itérations correspondant au nombre d'itérations d'envoi du message et en ce que l'étape de transmission est répétée un nombre de fois correspondant au nombre d'itérations indiqué dans le message.

Ainsi, grâce au procédé de l'invention, l'émetteur a la possibilité de paramétrer dans un message, tel que par exemple un message SMS, le nombre d'actes (envois successifs) qu'il souhaite effectuer avec ce message. Le procédé de l'invention offre, par conséquent, à l'utilisateur un bien meilleur confort d'usage en comparaison avec les solutions de l'art antérieur où l'utilisateur doit composer et envoyer N fois son message SMS à partir de son terminal pour qu'il soit délivré N fois au destinataire. Ce confort est en outre amélioré par la réduction de l'occupation des ressources du réseau (ex. bande passante) et une diminution du nombre des requêtes à traiter. Du point de vue de l'opérateur, cela lui permet d'optimiser ses ressources et de limiter la saturation de son réseau.

Pour permettre une facturation proportionnelle au nombre de messages effectivement délivrés au destinataire depuis la passerelle, le procédé comprend en outre une étape de génération par la passerelle d'un nombre de tickets de taxation bruts correspondant au nombre d'itérations indiqué dans le message et une étape d'envoi desdits tickets vers un module de médiation d'un centre de facturation.

Ainsi, en générant un ticket de taxation pour chaque transmission du message SMS par la passerelle au destinataire, la présente invention résout aussi le problème de la facturation d'un unique dépôt de message SMS de l'utilisateur proportionnellement au nombre d'actes payants (nombre de fois que le message SMS est délivré au destinataire) initiés par l'utilisateur.

Selon un aspect de l'invention, dans l'étape de génération, la passerelle envoie lesdits tickets de taxation brut générés en appliquant un décalage temporel entre chaque envoi de ticket au module de médiation du centre de facturation.

Cet envoi peut être successivement afin de garantir que l'ordre dans lequel les tickets sont émis est la même que l'ordre dans lequel les tickets sont reçus.

Le décalage temporel permet de s'assurer que tous les tickets de taxation générés pour un envoi multiple d'un même message SMS seront bien tous pris en compte dans la facturation de l'utilisateur. En effet, si tous les tickets de taxation bruts, générés pour un même message SMS qui est délivré plusieurs fois au même destinataire, sont envoyés simultanément au centre de facturation, ce dernier risque de ne prendre en compte qu'un seul de ces tickets en considérant que les autres tickets correspondent au même acte, ce qui n'est pas le cas. En effet, les doublons de tickets sont rejetés dans le système de facturation.

Selon un autre aspect de l'invention, dans l'étape de composition, le nombre d'itérations est accolé au numéro d'appel du destinataire du message. Cela permet d'utiliser avantageusement les chiffres disponibles dans le champ correspondant au numéro court du destinataire pour le nombre d'itérations. En effet la norme (ETSI 3GPP TS 23.040) autorise jusqu'à 20 chiffres pour un numéro d'appel SMS qui est en général seulement de 5 chiffres, ce qui laisse une "réserve" conséquente pour le nombre d'itérations. On évite ainsi d'avoir à rajouter un champ supplémentaire dans l'entête du message SMS et donc d'avoir à modifier la norme.

L'invention concerne également une passerelle dans un système de diffusion de messages, ladite passerelle étant destinée à recevoir un message envoyé à partir d'un terminal et à transmettre ledit message vers un destinataire indiqué dans le message,
caractérisée en ce qu'elle comprend des moyens pour identifier un nombre d'itérations présent dans le message et pour transmettre ledit message vers ledit destinataire indiqué un nombre de fois correspondant au nombre d'itérations.

La passerelle de l'invention apporte les mêmes avantages en termes de confort d'utilisation et de libération de ressources que ceux mentionnés précédemment vis-à-vis du procédé de l'invention. On constate en outre que les moyens permettant l'envoi multiple d'un même message SMS sont implémentés dans la passerelle SMS. Par conséquent, la mise en oeuvre de la présente invention n'impacte pas le terminal de l'utilisateur et ne nécessite aucune modification à son niveau.

Pour assurer une facturation proportionnelle au nombre d'envois au destinataire demandé par l'utilisateur, la passerelle comprend en outre des moyens pour générer un nombre de tickets de taxation bruts correspondant au nombre d'itérations indiqué dans le message et pour envoyer lesdits tickets à un module de médiation d'un centre de facturation.

La passerelle peut comprendre en outre des moyens pour envoyer lesdits tickets de taxation bruts générés en appliquant un décalage temporel entre chaque envoi de ticket au module de médiation du centre de facturation. Ceci garantit la prise en compte de tous les tickets générés pour l'envoi multiple d'un même message SMS. La passerelle SMS selon l'invention permet ainsi la facturation d'un envoi multiple d'un même message SMS à un même destinataire, et ce sans nécessiter de modifications au niveau des moyens de facturation déjà en place dans les systèmes de diffusion de messages SMS.

La présente invention concerne encore un programme d'ordinateur, comprenant des instructions de code de programme pour l'exécution d'au moins l'une des étapes d'un procédé décrit ci-dessus, lorsque ledit programme est exécuté sur un ordinateur.

La présente invention concerne encore un signal porteur d'une information représentative pour un nombre d'itérations d'envoi d'un message depuis une passerelle vers un destinataire.

La présente invention concerne encore un produit programme d'ordinateur comprenant des instructions de code de programme enregistrés sur un support lisible par un ordinateur, pour mettre en oeuvre au moins l'une des étapes d'un procédé décrit ci-dessus, lorsque ledit programme est exécuté sur un ordinateur.

Il est à noter qu'une partie des étapes décrites ci-dessus est exécutée (mise en oeuvre) dans le terminal (7; 8) et une autre partie est exécutée (mise en oeuvre) dans la passerelle (10).

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique d'une architecture d'un système de diffusion et de facturation de messages SMS selon l'art antérieur,
- la figure 2 est un diagramme montrant les séquences d'échange entre les différents éléments du système de la figure 1 réalisées lors d'envoi multiple d'un même message SMS selon l'art antérieur,
- la figure 3 est une vue schématique d'une architecture d'un système de diffusion et de facturation de messages SMS conformément à un mode de réalisation de l'invention,
- la figure 4 est un ordinogramme montrant les étapes réalisées lors de la diffusion et de la facturation d'un envoi multiple d'un message SMS conformément à l'invention, et
- la figure 5 est un diagramme montrant les séquences d'échange entre les différents éléments du système de la figure 3 réalisées lors d'un envoi multiple d'un même message SMS selon l'invention.

### Description détaillée des modes de réalisation de l'invention

La présente invention propose une solution pour permettre à un utilisateur de délivrer plusieurs fois un même message, tel qu'un message court du type SMS (Short Message Service), à un même destinataire en ne déposant (composition et envoi message SMS à partir du terminal) ce message qu'une seule fois. Comme décrit plus loin en détail, la mise en oeuvre de la présente invention est réalisée principalement par des ajouts logiciels (module de traitement) dans une passerelle SMS, ce qui permet d'impacter au minimum les autres éléments du système de diffusion de messages SMS et d'intégrer la solution de l'invention dans les systèmes existants par des modifications uniquement au niveau de la passerelle SMS.

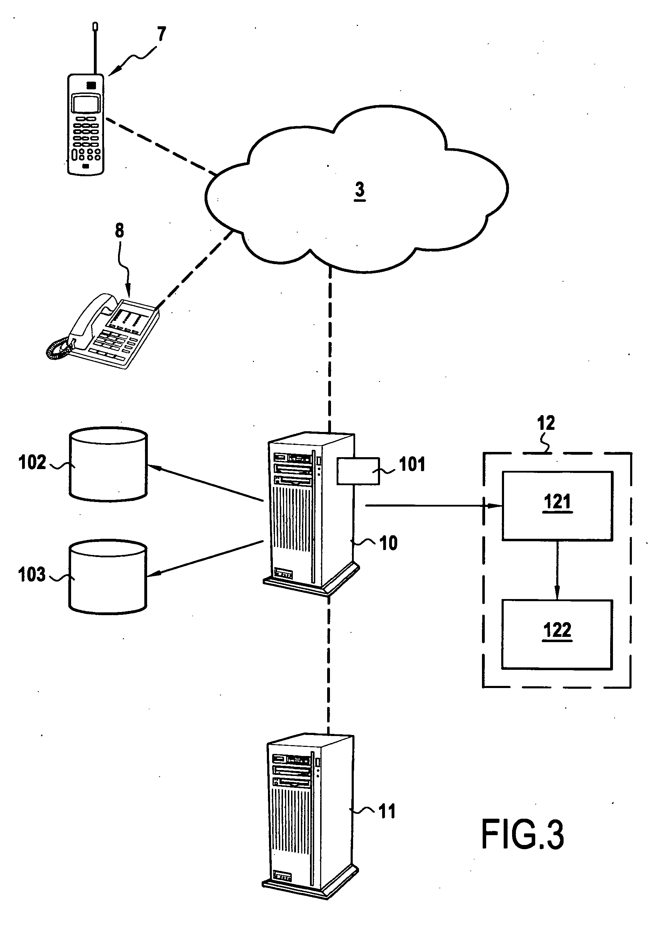

La figure 3 illustre un exemple d'une architecture d'un système de diffusion de messages SMS dans laquelle l'invention peut être mise en oeuvre. De façon connue, cette architecture comprend :
- au moins un terminal mobile 7 (GSM, GPRS ou UMTS) ou un terminal fixe 8 permettant à l'utilisateur d'écrire un message et de saisir le numéro court du destinataire (fournisseur de services) auquel il souhaite envoyer un message court tel qu'un message SMS;
- un réseau de télécommunication 3 géré par un opérateur de télécommunication (mobile et/ou fixe) et par lequel transitent les messages SMS déposés par l'utilisateur;
- une passerelle SMS 10 recevant le message SMS déposé et qui traduit le numéro d'appel court indiqué dans le message en un numéro normalisé pour acheminer le message jusqu'au destinataire. La passerelle SMS 10 est par exemple un équipement SMSC (Short Message Service Center) dans le cas d'un réseau mobile, ou une plateforme SIP ("Session Initiation Protocol" pour protocole de signalisation pour Internet) ou tout autre équipement compatible avec la réception d'un message court tel qu'un message SMS. La passerelle est en général constituée d'un serveur informatique en liaison à la fois avec un réseau de télécommunication auquel est abonné l'utilisateur du terminal et avec le réseau du destinataire des messages SMS (ici la plateforme de services 5). Ce serveur comprend des moyens de traitement programmés pour traiter les requêtes de transmission correspondant aux messages SMS qu'il reçoit en dépôt des utilisateurs;
- une base de données de numéros d'appels 102 en liaison avec la passerelle SMS 10 permettant de faire la correspondance entre le numéro court que l'utilisateur a mentionné dans son message et le numéro normalisé;
- une base de données de taxation 103 en liaison avec la passerelle SMS 10 permettant de rajouter des informations sur le ticket de taxation brut émis par la passerelle SMS pour que le module de valorisation puisse déterminer le coût de l'usage et surtout mettre à jour le solde du compte client.
- une plateforme de services 11 (fournisseur de services) destinataire des messages SMS;
- un centre de facturation 12 comprenant:
- un module de médiation 121 qui est un système (matériel et logiciel) de l'opérateur de télécommunication permettant de compléter les données de gestion du ticket de taxation pour que ce dernier puisse être valorisé par le module de valorisation et que le coût calculé ultérieurement par le module de valorisation soit affecté au bon client;
- un module de valorisation 122 qui est un système (matériel et logiciel) de l'opérateur de télécommunication permettant d'associer un coût au ticket de taxation émis lors de chaque envoi de message SMS.

De façon connue, la facturation d'un message SMS est réalisée au moyen d'un ticket de taxation brut, encore appelé détail de communication (DC), qui est généré par la passerelle SMS et envoyé au module de médiation d'un centre de facturation. Ce ticket, qui est émis après chaque service rendu à l'utilisateur, comprend les informations nécessaires à la valorisation ultérieure du service. Cette valorisation est réalisée par le module de valorisation du centre de facturation et consiste à associer au ticket de taxation, enrichi par le module de médiation, une valeur. Cette valeur découle de l'application de règles tarifaires (auxquelles l'utilisateur a souscrites) appliquées aux paramètres présents dans le ticket de taxation.

Conformément à l'invention, c'est au niveau de la passerelle SMS 10 que va être principalement mis en oeuvre l'invention au moyen d'un module de traitement 101, élément logiciel comprenant des règles pour analyser le message SMS déposé, identifier le nombre d'itérations d'envoi de ce message et renvoyer le messages SMS ainsi que générer des tickets de taxation bruts un nombre de fois équivalent au nombre d'itérations.

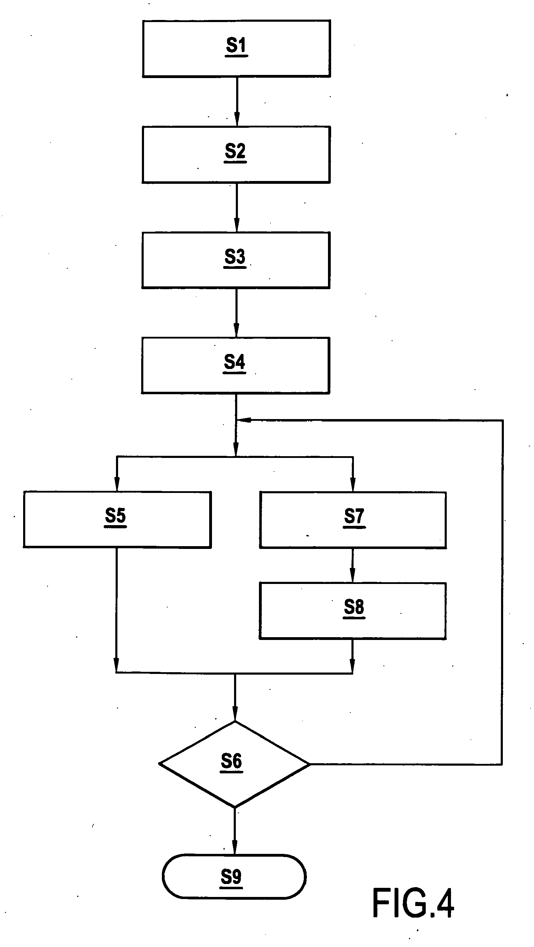

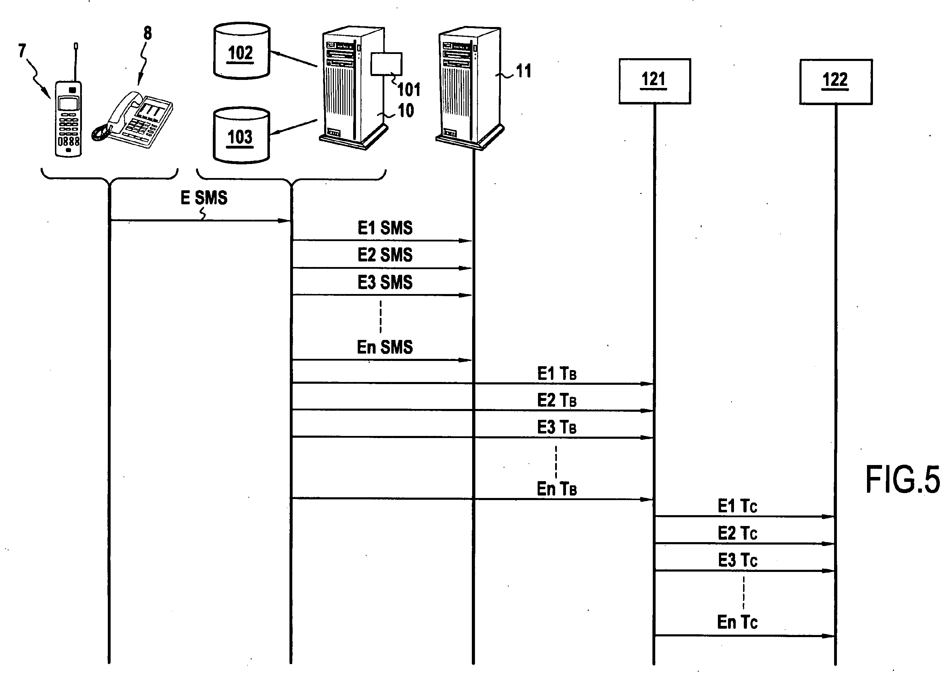

On décrit maintenant en relation avec les figures 4 et 5, les étapes mises en oeuvre, dans l'architecture de la figure 3, lors de l'envoi d'un message SMS comprenant un nombre d'itérations conformément à la présente invention. Le nombre d'itérations est de préférence accolé au numéro d'appel court présent dans l'entête du message SMS envoyé par l'utilisateur. En effet, la norme permet d'utiliser des numéros pouvant contenir jusqu'à 20 chiffres. Actuellement, les numéros d'appel courts utilisent en général 5 chiffres. L'invention utilise avantageusement cette "réserve" de chiffres disponibles pour le nombre d'itérations, ce qui permet la mise en oeuvre de l'invention sans nécessiter de modification de la norme.

Dans la première étape (S1), l'utilisateur rédige sur son terminal 7 ou 8 le contenu de son message, saisit le numéro d'appel court de la plateforme de services 11 ainsi que le nombre d'itérations N correspondant au nombre de fois qu'il souhaite que son message SMS soit délivré à la plateforme de services 11. Le message SMS ainsi composé est envoyé à la passerelle SMS 10 (étape S2, envoi ESMS sur la figure 5).

Après réception du message SMS par la passerelle SMS 10 (étape S3), cette dernière traduit le numéro court indiqué dans le message en un numéro d'appel normalisé et identifie, sous le contrôle du module de traitement 101, le nombre d'itérations accolé au numéro d'appel court (étape S4). La passerelle 10 envoie alors une première fois le message SMS à la plateforme de services 11 (étape S5). Le module de traitement 101 vérifie si le nombre d'itérations a été atteint (étape S6). Si ce n'est pas le cas, le message SMS est de nouveau envoyé (étape S5), et ce jusqu'à ce que le nombre d'itérations N soit atteint (envois E1 SMS - EN SMS sur la figure 5).

La passerelle génère en parallèle (sous le contrôle du module de traitement 101) et pour chaque envoi du même message SMS (E1 SMS-EN SMS) un ticket brut T_{B} qu'elle transmet au module de médiation 121 du centre de facturation 12 (étape S7, envois E1 T_{B} - EN T_{B} sur la figure 5). Le module de médiation traite les N tickets de taxation bruts qu'il reçoit comme il traite habituellement les autres tickets de taxation bruts correspondant à un envoi unique d'un message SMS. En d'autres termes, si le module de médiation reçoit N tickets de taxation bruts pour le même message SMS transmis N fois à la plateforme 11, il génère N tickets de taxation complets T_{C} qu'il transmet au module de valorisation 122 (étape S8, envois E1 T_{C} - EN T_{C} sur la figure 5). Une fois que le message SMS a été délivré N fois et que les N tickets de taxation bruts correspondant ont tous été générés et transmis au centre de facturation, le traitement s'arrête (étape S9).

Toutefois, afin de garantir la prise en compte de tous les tickets de taxation bruts générés par la passerelle SMS pour un même message SMS et pour un même destinataire, le module de traitement commande la passerelle SMS pour que ces tickets soient envoyés les uns après les autres en appliquant entre chaque envoi de tickets un décalage temporel pouvant être de quelques millisecondes jusqu'à quelques secondes. En effet, les tickets de taxation bruts envoyés au centre de facturation sont traités en temps réel. Par conséquent, si tous les tickets de taxation bruts générés pour l'envoi multiple d'un même SMS à un même destinataire sont envoyés simultanément au centre de facturation, ce dernier pourrait considérer que tous ces tickets correspondent en fait au même acte et qu'il doit prendre en compte un seul de ces tickets pour la facturation de l'utilisateur. Aussi, conformément à l'invention, les tickets de taxation bruts sont de préférence envoyés au centre de facturation avec un décalage temporel entre chaque ticket. Cela permet de réaliser une facturation proportionnelle au nombre d'actes réellement effectués avec le même message SMS, et ce avec des moyens facturation existants (i.e. capables de traiter la facturation d'un seul acte à la fois).

On peut constater que grâce à la présente invention, l'utilisateur ne rédige et n'envoie qu'une seul fois son message SMS qui est pourtant délivré N fois (nombre N d'itérations) à la plateforme de service. En effet, le module de traitement 101 va commander la passerelle SMS 10 pour générer et délivrer N messages SMS identiques à la plateforme de services 11. En générant N messages SMS identiques depuis la passerelle SMS vers la plateforme de services, on obtient un gain de N-1 connexions entre le terminal de l'utilisateur et la passerelle SMS libérant ainsi des ressources sur le réseau de télécommunication 9.

La présente invention trouve notamment des applications avantageuses lorsque l'envoi de messages SMS permet à l'utilisateur de participer à des votes ou de faire des dons.

En effet, les médias (télévision, radios, etc.) proposent de plus en plus d'émissions ou de jeux dans lesquels il est possible de participer en votant par messages SMS. Par exemple, certaines émissions de télévision mettent en compétition plusieurs candidats (ex. chanteurs, danseurs) qui sont départagés par les votes des téléspectateurs envoyés par messages SMS.

Actuellement, si un téléspectateur souhaite, par exemple, voter 3 fois pour son candidat favori, il doit répéter 3 fois les opérations suivantes :
- composition du message en sélectionnant son candidat par exemple en tapant le chiffre 1,
- saisie du numéro d'appel court dédié à l'émission télévisée (par exemple 99999), et
- envoi du message SMS.

L'utilisateur effectue donc 3 fois ces opérations pour réaliser 3 envois successifs du même message SMS au même destinataire comme indiqué dans le tableau ci-dessous.

| Envois depuis le terminal | Numéros saisis | Contenu |
|---|---|---|
| 1^{er} envoi | 99999 | 1 |
| 2^{e} envoi | 99999 | 1 |
| 3^{e} envoi | 99999 | 1 |

Ces 3 envois successifs engendrent 3 facturations pour l'utilisateur.

Avec la présente invention comme décrite précédemment, l'utilisateur n'effectue qu'une seule fois ces opérations en ajoutant simplement un nombre d'itérations de 3 à la fin du numéro d'appel court dédié à l'émission, ce qui donne pour un utilisateur souhaitant voter 3 fois:

| Envois depuis le terminal | Numéros saisis | Contenu |
|---|---|---|
| 1^{er} et unique envoi | 999993 | 1 |

L'utilisateur gagne ainsi véritablement en confort, ce qui l'incite d'autant plus à voter. La suggestion de la composition du numéro d'appel court suivi du nombre de votes est faite par l'émission elle-même.

La présente invention peut également avantageusement s'appliquer dans le cas de dons par messages SMS En effet, on a vu récemment qu'à la suite à certaines catastrophes naturelles il était possible de faire des dons en nature aux associations caritatives par le biais de messages SMS. A cet effet, les médias (ex. émission télévisée) sollicitent la générosité des personnes en communiquant un numéro d'appel court par lequel elles peuvent faire des dons par messages SMS. Le don est constitué par une partie du coût facturé pour chaque message SMS envoyé à ce numéro qui est reversé à une association caritative. Le montant du don est fixé unitairement pour un message SMS, par exemple 1 euro par message SMS envoyé.

Actuellement, si une personne veut faire un don d'un montant de plusieurs euros, elle doit composer le numéro d'appel court communiqué pour l'opération caritative et envoyer son message SMS autant de fois que nécessaire pour atteindre le montant qu'elle souhaite donner.

Grâce à la présente invention, la démarche du donateur devient simplement : composition du numéro d'appel de l'opération caritative suivi du nombre d'itérations correspondant au nombre de dons souhaités, cette composition étant suggérée par le média en charge de la communication de l'opération, et envoi du message SMS. Le donateur gagne en simplicité d'utilisation, ce qui l'incite d'autant plus à faire un don multiple.

Bien que l'invention ait été illustrée ci-dessus à l'aide de l'exemple d'un message du type SMS, elle s'applique, le cas échéant, sur tous autres types de messages, comme il sera envisagé par l'homme du métier.

## Revendications

1. Procédé de diffusion de messages comprenant:
- une étape de composition d'un message à partir d'un terminal (7 ; 8) comportant au moins un numéro d'appel d'un destinataire (11) dudit message,
- une étape d'envoi du message par le terminal (7 ; 8) à une passerelle (10),
- une étape de transmission du message par la passerelle (10) vers le destinataire (11) dudit message,
**caractérisé en ce que** l'étape de composition comprend en outre une introduction d'un nombre d'itérations (N) correspondant à un nombre d'itérations d'envoi du message et **en ce que** l'étape de transmission est répétée un nombre de fois correspondant au nombre d'itérations (N) indiqué dans le message.

2. Procédé selon la revendication 1, **caractérisé en ce qu'**il comprend en outre une étape de génération par la passerelle (10) d'un nombre de tickets de taxation bruts (T_{B}) correspondant au nombre d'itérations (N) indiqué dans le message et une étape d'envoi desdits tickets vers un module de médiation (121) d'un centre de facturation (12).

3. Procédé selon la revendication 2, **caractérisé en ce que**, dans l'étape de génération, la passerelle (10) envoie lesdits tickets de taxation brut générés (T_{B}) en appliquant un décalage temporel entre chaque envoi de ticket au module de médiation (121) du centre de facturation (12).

4. Procédé selon l'une quelconque des revendications 1 à 3, **caractérisé en ce que**, dans l'étape de composition, le nombre d'itérations (N) est accolé au numéro d'appel du destinataire du message.

5. Passerelle (10) dans un système de diffusion de messages, ladite passerelle étant destinée à recevoir un message envoyé à partir d'un terminal et à transmettre ledit message vers un destinataire (11) indiqué dans le message,
**caractérisée en ce qu'**elle comprend des moyens pour identifier un nombre d'itérations (N) présent dans le message et pour transmettre ledit message vers ledit destinataire (11) indiqué un nombre de fois correspondant au nombre d'itérations (N).

6. Passerelle selon la revendication 5, **caractérisée en ce qu'**elle comprend en outre des moyens pour générer un nombre de tickets de taxation bruts (T_{B}) correspondant au nombre d'itérations (N) indiqué dans le message et pour envoyer lesdits tickets à un module de médiation (121) d'un centre de facturation (12).

7. Passerelle selon la revendication 6, **caractérisée en ce qu'**elle comprend en outre des moyens pour envoyer lesdits tickets de taxation bruts générés (T_{B}) en appliquant un décalage temporel entre chaque envoi de ticket au module de médiation (121) du centre de facturation (12).

8. Un programme d'ordinateur, comprenant des moyens de code de programme pour effectuer la totalité des étapes de l'une quelconque des revendications 1 à 4, lorsque ledit programme fonctionne sur un ordinateur.

9. Signal porteur d'un message comprenant un nombre d'itérations (N) d'envoi dudit message depuis une passerelle (10) vers un destinataire (11).

10. Un produit de programme d'ordinateur, comprenant des moyens de code de programme stockés sur un milieu lisible par un ordinateur, pour mettre en oeuvre le procédé selon l'une quelconque des revendications 1 à 4, lorsque ledit produit de programme fonctionne sur un ordinateur.

## Patentansprüche

1. Nachrichtensendeverfahren, umfassend:
- einen Schritt des Verfassens einer Nachricht von einem Terminal (7; 8) aus, umfassend mindestens eine Rufnummer eines Empfängers (11) der Nachricht,
- einen Schritt des Sendens der Nachricht durch das Terminal (7; 8) an ein Gateway (10),
- einen Schritt des Übertragens der Nachricht durch das Gateway (10) zu dem Empfänger (11) der Nachricht,
**dadurch gekennzeichnet, dass** der Schritt des Verfassens ferner eine Einführung einer Anzahl von Iterationen (N) entsprechend einer Anzahl von Sendeiterationen der Nachricht umfasst, und dass der Schritt des Übertragens eine Anzahl von Malen wiederholt wird, die der Anzahl von Iterationen (N), die in der Nachricht angegeben ist, entspricht.

2. Verfahren nach Anspruch 1, **dadurch gekennzeichnet, dass** es ferner einen Schritt der Erzeugung durch das Gateway (10) einer Anzahl von Bruttogebührenbelegen (T_{B}) entsprechend der Anzahl von Iterationen (N), die in der Nachricht angegeben ist, und einen Schritt des Sendens der Belege zu einem Mediationsmodul (121) eines Verrechnungszentrums (12) umfasst.

3. Verfahren nach Anspruch 2, **dadurch gekennzeichnet, dass** im Erzeugungsschritt das Gateway (10) die erzeugten Bruttogebührenbelege (T_{B}) sendet, wobei eine Zeitverzögerung zwischen jedem Senden eines Belegs an das Mediationsmodul (121) des Verrechnungszentrums (12) angewandt wird.

4. Verfahren nach einem der Ansprüche 1 bis 3, **dadurch gekennzeichnet, dass** in dem Verfassungsschritt die Anzahl von Iterationen (N) der Rufnummer des Empfängers der Nachricht anhaftet.

5. Gateway (10) in einem Nachrichtensendesystem, wobei das Gateway dazu bestimmt ist, eine Nachricht zu empfangen, die von einem Terminal gesandt wird, und die Nachricht zu einem Empfänger (11), der in der Nachricht angeführt ist, zu übertragen,
**dadurch gekennzeichnet, dass** es Mittel umfasst, um eine Anzahl von Iterationen (N), die in der Nachricht vorhanden sind, zu identifizieren und die Nachricht zu dem angeführten Empfänger (11) eine Anzahl von Malen entsprechend der Anzahl von Iterationen (N) zu übertragen.

6. Gateway nach Anspruch 5, **dadurch gekennzeichnet, dass** es ferner Mittel zur Erzeugung einer Anzahl von Bruttogebührenbelegen (T_{B}) entsprechend der Anzahl von Iterationen (N), die in der Nachricht angegeben ist, und zum Senden der Belege an ein Mediationsmodul (121) eines Verrechnungszentrums (12) umfasst.

7. Gateway nach Anspruch 6, **dadurch gekennzeichnet, dass** es ferner Mittel zum Senden der erzeugten Bruttogebührenbelege (T_{B}) unter Anwendung einer Zeitverzögerung zwischen jedem Senden eines Belegs an das Mediationsmodul (121) des Verrechnungszentrums (12) umfasst.

8. Computerprogramm, umfassend Programmcodemittel, um die Gesamtheit der Schritte eines der Ansprüche 1 bis 4 auszuführen, wenn das Programm auf einem Computer funktioniert.

9. Signal, das eine Nachricht trägt, umfassend eine Anzahl von Sendeiterationen (N) der Nachricht von einem Gateway (10) zu einem Empfänger (11).

10. Computerprogrammprodukt, umfassend Programmcodemittel, die in einem von einem Computer lesbaren Medium gespeichert sind, um das Verfahren nach einem der Ansprüche 1 bis 4 einzusetzen, wenn das Programm auf einem Computer funktioniert.

## Claims

1. Message broadcasting method comprising:
- a step of composition of a message from a terminal (7; 8) comprising at least one call number of a recipient (11) of said message,
- a step of sending of the message by the terminal (7; 8) to a gateway (10),
- a step of transmission of the message by the gateway (10) to the recipient (11) of said message,
**characterized in that** the composition step further comprises an introduction of a number of iterations (N) corresponding to a number of iterations of sending of the message and **in that** the transmission step is repeated a number of times corresponding to the number of iterations (N) indicated in the message.

2. Method according to Claim 1, **characterized in that** it further comprises a step of generation, by the gateway (10), of a number of raw charging tickets (T_{B}) corresponding to the number of iterations (N) indicated in the message and a step of sending of said tickets to a mediation module (121) of a billing centre (12).

3. Method according to Claim 2, **characterized in that**, in the generation step, the gateway (10) sends said generated raw charging tickets (T_{B}) by applying a time offset between each sending of a ticket to the mediation module (121) of the billing centre (12).

4. Method according to any one of Claims 1 to 3, **characterized in that**, in the composition step, the number of iterations (N) is attached to the call number of the recipient of the message.

5. Gateway (10) in a message broadcasting system, said gateway being intended to receive a message sent from a terminal and to transmit said message to a recipient (11) indicated in the message,
**characterized in that** it comprises means for identifying a number of iterations (N) present in the message and for transmitting said message to said indicated recipient (11) a number of times corresponding to the number of iterations (N).

6. Gateway according to Claim 5, **characterized in that** it further comprises means for generating a number of raw charging tickets (T_{B}) corresponding to the number of iterations (N) indicated in the message and for sending said tickets to a mediation module (121) of a billing centre (12).

7. Gateway according to Claim 6, **characterized in that** it further comprises means for sending said generated raw charging tickets (T_{B}) by applying a time offset between each sending of a ticket to the mediation module (121) of the billing centre (12).

8. Computer program, comprising program code means for performing all the steps of any one of Claims 1 to 4, when said program runs on a computer.

9. Signal bearing a message comprising a number of iterations (N) of sending of said message from a gateway (10) to a recipient (11).

10. Computer program product, comprising program code means stored on a computer-readable medium, for implementing the method according to any one of Claims 1 to 4, when said program product runs on a computer.
